# FASCICULE DE BREVET EUROPEEN

(11) **EP 3 617 527 B1**
(45) Date de publication et mention de la délivrance du brevet: **15.04.2026**
(21) Numéro de dépôt: 19189950.9
(22) Date de dépôt: 05.08.2019
(51) Int. Cl.: F04D 29/32, F01D 5/14, F04D 29/38, F04D 29/68, F04D 29/54

(54) **AUBE A PROTUBÉRANCE POUR COMPRESSEUR DE TURBOMACHINE**
LEITSCHAUFEL MIT VORSPRUNG FÜR KOMPRESSOR EINES TURBOTRIEBWERKS
VANE WITH PROJECTION FOR A TURBINE ENGINE COMPRESSOR

(30) Priorité: 31.08.2018 BE 201805606
(43) Date de publication de la demande: 04.03.2020
(73) Titulaire: Safran Aero Boosters SA, 4041 Herstal (BE)
(72) Inventeur: HIERNAUX, Stéphane, 4680 Oupeye (BE)
(74) Mandataire: Ipsilon Luxembourg

(56) Documents cités:
- EP-A1- 2 019 186
- EP-A1- 2 093 378
- EP-A2- 0 976 928
- DE-A1- 2 135 287
- FR-A1- 2 867 506
- FR-A5- 2 114 693
- GB-A- 2 032 048
- GB-A- 2 033 022
- GB-A- 750 305
- JP-A- H0 711 901
- US-A- 3 014 640
- US-A- 3 653 110
- US-A- 4 720 239
- US-A- 5 288 209
- US-A1- 2004 241 003
- US-A1- 2009 185 911
- US-A1- 2012 128 480
- US-A1- 2016 024 930
- US-B1- 6 183 197

## Description

### Domaine technique

L'invention concerne le domaine des turbomachines axiales et en particulier les compresseurs de turboréacteur d'aéronef. Plus spécifiquement, l'invention a trait à une conception particulière d'une aube pour une turbomachine axiale.

### Technique antérieure

Dans un compresseur de turbomachine axiale peuvent survenir des pertes aérodynamiques. Par exemple, certaines interférences entre l'écoulement proche de la virole et l'écoulement dévié au voisinage de l'aube entraîne des phénomènes dits « secondaires » qui se traduisent par des pertes et d'instabilités (« tip leakage vortex », « corner stall », ...).

Afin d'atténuer ce phénomène, des formes d'aube différentes ont été développées, avec par exemple un effet « sweep » ou de « bow », étendant l'aube axialement ou circonférentiellement.

Aussi, il est connu de prévoir des protubérances sur les viroles internes ou externes qui supportent les aubes. Ce principe prend souvent le nom anglais de « contouring » ou « contouring 3D » car il consiste en une modification du contour de la virole. Des creux ou des bosses peuvent ainsi être conçus sur une surface de guidage du flux entre deux aubes voisines.

Le document US 2013/0101409 A1 décrit un exemple de contouring dans lequel une protubérance est prévue à la jonction entre l'aube et la virole. Dans le prolongement aval de cette protubérance, une bosse est agencée sur l'extrados d'une aube au niveau du bord de fuite. Cette conception laisse néanmoins une marge d'amélioration possible pour le rendement du compresseur.

Le document de brevet publié US 2016/0024930 A1 divulgue une aube de turbomachine comprenant au moins une protubérance du du côté de l'intrados, s'étendant de 10% à 90% de la dimension de la corde axiale.

Le document US 4,720,239 A divulgue des pales de turbomachine comprenant des non-uniformités pouvant correspondre à un arrangement de rainures et/ou d'arêtes orientées vers l'aval sur les surfaces des pales.

Le document US 2004/0241003 A1 décrit une pale comprenant un renfoncement dans la surface latérale de pression avec une périphérie extérieure disposée radialement vers l'intérieur de l'extrémité de la pale, et vers l'intérieur le long de la ligne de corde à partir du bord d'attaque et du bord de fuite.

Cependant, les solutions divulguées par l'état de l'art présentent toutes une marge d'optimisation afin d'améliorer davantage le rendement du compresseur de la turbomachine.

### Résumé de l'invention

### Problème technique

L'invention a pour objectif de minimiser les pertes aérodynamiques pour améliorer le rendement d'une turbomachine, en particulier au niveau des aubes de compresseur.

### Solution technique

L'invention a pour objet une aube pour compresseur de turbomachine axiale, comprenant un bord d'attaque, un bord de fuite, une surface extrados et une surface intrados, remarquable en ce que l'aube comprend une unique irrégularité sous la forme d'une protubérance en saillie de l'extrados ou de l'intrados ou sous la forme d'un renfoncement niché dans l'extrados ou l'intrados, l'irrégularité présentant une direction de plus grande dimension sensiblement parallèle au bord d'attaque, l'irrégularité (52) présentant des variations d'épaisseur ou de profondeur selon sa direction (B) de plus grande dimension et le point (E) de l'irrégularité (52) présentant l'épaisseur ou la profondeur maximale ayant une position radiale (RE) qui est comprise entre 25 et 75% de la hauteur (H) de l'aube (26).

L'irrégularité peut être un épaississement ou un amincissement de l'aube par rapport à un profil nominal. L'irrégularité est continue et progressive dans les trois directions de l'espace.

Comme le bord d'attaque peut être courbe, pour qualifier son orientation, il peut convenir de faire référence à sa direction moyenne.

L'épaisseur ou la profondeur maximale est la plus grande distance entre la surface de l'irrégularité et la surface théorique nominale de l'extrados ou intrados en l'absence d'irrégularité. La présente demande utilisera indifféremment les termes d'épaisseur ou profondeur maximale aussi bien que « amplitude ».

Selon un mode avantageux de l'invention, le point de l'irrégularité présentant l'épaisseur ou la profondeur maximale a une position le long de la corde, mesurée depuis le bord d'attaque, comprise entre 0 et 30% de la corde.

Selon un mode avantageux de l'invention, l'irrégularité présente une direction de plus grande dimension qui forme un angle compris entre 0 et 20° par rapport à la direction moyenne du bord d'attaque.

Selon un mode avantageux de l'invention, l'épaisseur ou la profondeur maximale de l'irrégularité, mesurée selon la normale à l'extrados ou l'intrados est comprise entre 1 et 15% de l'épaisseur de l'aube au droit du point de l'irrégularité présentant l'épaisseur ou la profondeur maximale.

Selon un mode avantageux de l'invention, l'aube comprend un pied et une tête définissant les extrémités radiales de l'aube, l'irrégularité étant à une distance du pied et de la tête de l'aube d'au moins 5% de la hauteur radiale de l'aube.

Ainsi, l'irrégularité est éloignée de la jonction entre l'aube et la virole. Aussi, elle ne forme pas de continuité avec un contouring sur la virole.

L'invention porte également sur une aube pour compresseur de turbomachine axiale, comprenant un bord d'attaque, un bord de fuite, une surface extrados et une surface intrados, remarquable en ce qu'elle comprend une unique irrégularité sous la forme d'une protubérance en saillie de l'extrados ou de l'intrados ou sous la forme d'un renfoncement niché dans l'extrados ou l'intrados, l'irrégularité étant circonscrite à la moitié radiale externe de l'aube et présentant une direction de plus grande dimension qui est sensiblement axiale, l'irrégularité étant venue de matière avec l'aube et étant apte à former une surface de guidage de l'air, l'irrégularité présentant une continuité de matière progressive par rapport à l'extrados ou l'intrados, l'épaisseur ou la profondeur maximale de l'irrégularité, mesurée selon la normale à l'extrados ou l'intrados étant comprise entre 1 et 15% de l'épaisseur de l'aube au droit du point de l'irrégularité présentant l'épaisseur ou la profondeur maximale.

Selon un mode avantageux de l'invention, le point de l'irrégularité présentant l'épaisseur ou la profondeur maximale a une position radiale qui est comprise entre 70 et 100% de la hauteur de l'aube.

Selon un mode avantageux de l'invention, le point de l'irrégularité présentant l'épaisseur ou la profondeur maximale a une position le long de la corde, mesurée depuis le bord d'attaque, comprise entre 0 et 50% de la corde.

En d'autres termes, l'irrégularité est dans ce cas majoritairement dans la partie amont de l'aube.

Selon un mode avantageux de l'invention, l'irrégularité présente une direction de plus grande dimension qui forme un angle compris entre 45 et 90° avec la direction moyenne du bord d'attaque.

Selon un mode avantageux de l'invention, le facteur de forme de l'irrégularité est supérieur à deux.

Le facteur de forme est le ratio entre la dimension de l'irrégularité dans la direction de plus grande dimension et sa dimension dans la direction de seconde plus grande dimension. Les dimensions de l'irrégularité peuvent être mesurées curvilignement le long de l'extrados ou de l'intrados.

L'invention porte également sur une aube pour compresseur de turbomachine axiale, l'aube comprenant un bord d'attaque, un bord de fuite, une surface extrados et une surface intrados, remarquable en ce qu'elle comprend une unique irrégularité sous la forme d'une protubérance en saillie de l'extrados ou de l'intrados ou sous la forme d'un renfoncement niché dans l'extrados ou l'intrados, l'irrégularité étant circonscrite à la moitié radiale externe de l'aube et présentant une direction de plus grande dimension qui est sensiblement axiale, l'irrégularité étant venue de matière avec l'aube et étant apte à former une surface de guidage de l'air, l'irrégularité présentant une direction de plus grande dimension qui forme un angle compris entre 45 et 90° avec la direction moyenne du bord d'attaque, l'angle étant tel que l'irrégularité s'éloigne de la tête de l'aube en aval

Selon un mode avantageux de l'invention, l'épaisseur ou la profondeur maximale de l'irrégularité, mesurée selon la normale à l'extrados ou l'intrados est comprise entre 1 et 15% de l'épaisseur de l'aube au droit du point de l'irrégularité présentant l'épaisseur ou la profondeur maximale.

En pratique, l'amplitude des irrégularités peut donc être comprise entre quelques centièmes de millimètres et 1 ou 2 mm au plus.

Selon un mode avantageux de l'invention, l'irrégularité est asymétrique, le point milieu de l'irrégularité dans la direction de plus grande dimension étant préférentiellement en aval du point présentant l'épaisseur ou la profondeur maximale et/ou l'irrégularité comprend une pluralité de points pour lesquels l'épaisseur ou la profondeur de l'irrégularité est maximale.

Cette forme permet de dévier progressivement le flux d'amont vers l'aval.

Alternativement, une forme contraire peut être avantageuse en « sur-déviant » le flux en amont puis en revenant vers l'aube rapidement vers l'aval.

Selon un mode avantageux de l'invention, l'irrégularité s'étend principalement selon une direction non-linéaire, éventuellement en forme de S et/ou l'irrégularité présente une variation de largeur et/ou l'irrégularité forme avec l'extrados ou l'intrados une surface continue et dérivable. Ainsi, vu depuis une direction circonférentielle ou normale à l'extrados ou l'intrados, l'irrégularité peut avoir une forme en S.

Selon un mode avantageux de l'invention, l'irrégularité présente une variation de largeur. L'irrégularité peut avoir une largeur plus importante en amont qu'en aval ou inversement. La différence entre sa largeur amont et sa largeur aval peut être d'au moins 20%.

Selon un mode avantageux de l'invention, l'irrégularité comprend une pluralité de points pour lesquels l'épaisseur ou la profondeur de l'irrégularité est maximale. Ainsi, l'irrégularité peut comprendre une courbe ou une surface parallèle à l'extrados ou l'intrados, formant ainsi un plateau.

Selon un mode avantageux de l'invention, l'irrégularité forme avec l'extrados ou l'intrados une surface continue et dérivable. Ainsi, il n'y a pas de point anguleux ou d'arête anguleuse, ni sur l'irrégularité elle-même, ni à la surface de jonction entre l'irrégularité et l'extrados ou l'intrados, et ce dans les trois directions de l'espace.

L'invention porte également sur un procédé de fabrication d'une aube, remarquable en ce qu'il comprend une étape de fabrication d'une aube telle que décrite ci-dessus par un procédé de fabrication additive.

La fabrication additive permet en particulier d'obtenir des formes d'irrégularités que ne permettent pas d'obtenir les procédés usuels tels que la déformation plastique et l'usinage.

L'invention porte également sur un compresseur de turbomachine, comprenant au moins une rangée d'aubes rotoriques et au moins une rangée d'aubes statoriques, le compresseur étant caractérisé en ce qu'au moins une des aubes rotoriques ou statoriques est selon l'un des modes de réalisation décrit ci-dessus.

Selon un mode avantageux de l'invention, les aubes sont portées par une virole interne et/ou une virole externe, les viroles présentant entre deux aubes circonférentiellement adjacentes une surface régulière cylindrique ou conique.

Par surface régulière, on entend une surface dépourvue d'irrégularité. Seule les extrados ou intrados des aubes sont pourvus d'irrégularité sans qu'ils ne constituent une continuité d'un contouring sur une virole.

Selon un mode avantageux de l'invention, le compresseur comprend deux aubes circonférentiellement adjacentes et présentant chacune une irrégularité sur la face extrados et intrados en regard de l'autre aube, l'irrégularité sur l'extrados d'une des aubes formant une première surface et l'irrégularité sur l'intrados de l'autre aube formant une seconde surface, les première et seconde surfaces étant parallèles ou étant l'une l'image de l'autre par rotation autour de l'axe du compresseur, au moins en partie.

L'invention porte également sur une turbomachine, notamment un turboréacteur d'aéronef, comprenant un compresseur, remarquable en ce que le compresseur est conforme à l'un des modes de réalisation ci-dessus, le compresseur comprenant au moins : cinquante, ou quatre-vingt, ou cent aubes (26) selon l'une des variantes exposées ci-dessus.

De manière générale, les modes avantageux de chaque objet de l'invention sont également applicables aux autres objets de l'invention. Chaque objet de l'invention est combinable aux autres objets, et les objets de l'invention sont également combinables aux modes de réalisation de la description, qui en plus sont combinables entre eux, selon toutes les combinaisons techniques possibles, à moins que le contraire ne soit explicitement mentionné.

En particulier, une aube peut comprendre plusieurs irrégularités selon les variantes exposées ci-dessus sur ses surfaces extrados et intrados.

### Avantages apportés

L'invention permet de recadrer le flux dans le passage. L'irrégularité tend à limiter les décollements du flux d'air. Le débit traversant la grille d'aubes peut augmenter tout en évitant les phénomènes de pompage.

L'invention permet également de proposer une solution simple, résistante, légère, économique, fiable, facile à produire, commode d'entretien et d'inspection aisée.

Les conceptions présentées dans la présente invention permettent également l'augmentation de la stabilité mécanique et aérodynamique de l'aubage.

### Brève description des dessins

La figure 1 représente une turbomachine axiale selon l'invention ;
La figure 2 est un schéma d'un compresseur de turbomachine selon l'invention ;
La figure 3 illustre une vue isométrique d'une aube selon l'invention présentant une irrégularité sur son extrados ;
La figure 4 présente une section de l'aube de la figure 3 dans un plan perpendiculaire à la direction principale de l'aube ;
Les figures 5A à 5D illustrent divers exemples d'irrégularités ;
La figure 6 représente une partie de compresseur avec deux aubes adjacentes.

### Description des modes de réalisation

Dans la description qui va suivre, les termes « interne » et « externe » renvoient à un positionnement par rapport à l'axe de rotation d'une turbomachine axiale. La direction axiale correspond à la direction le long de l'axe de rotation de la turbomachine. La direction radiale est perpendiculaire à l'axe de rotation. La hauteur fait référence à une dimension radiale. L'amont et l'aval sont en référence au sens d'écoulement principal du flux dans la turbomachine. La longueur est la plus grande dimension d'un élément, la largeur est sa seconde plus grande dimension.

Il est à noter que les figures et notamment celles représentant la protubérance ou le renfoncement de l'aube, ne sont pas dessinées à l'échelle et que les dimensions peuvent être exagérées pour représenter plus clairement certains aspects de l'invention.

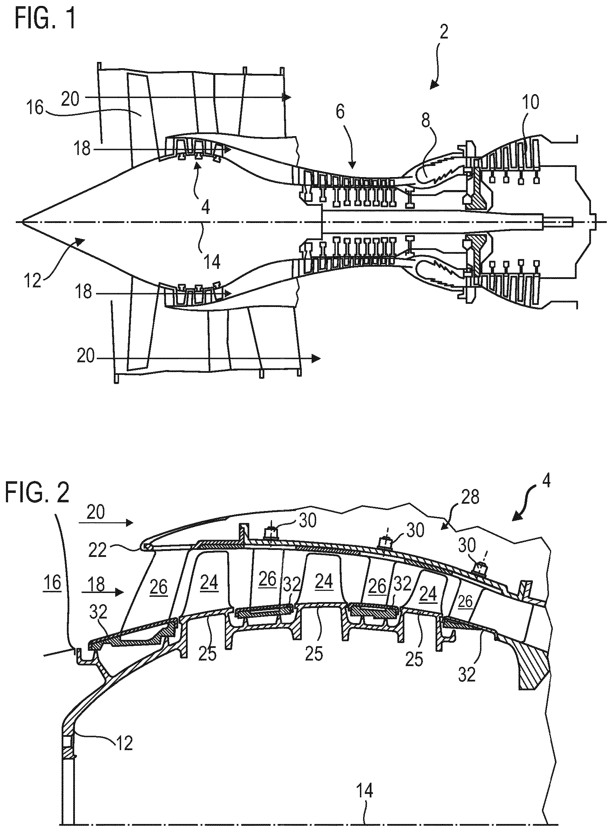

La figure 1 représente de manière simplifiée une turbomachine axiale. Il s'agit ici d'un turboréacteur double-flux. Le turboréacteur 2 comprend un premier niveau de compression, dit compresseur basse-pression 4, un deuxième niveau de compression, dit compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 4 et 6. Ces derniers comportent plusieurs rangées d'aubes de rotor associées à des rangées d'aubes de stator. La rotation du rotor autour de son axe de rotation 14 permet ainsi de générer un débit d'air et de comprimer progressivement ce dernier jusqu'à l'entrée de la chambre de combustion 8.

Un ventilateur d'entrée communément désigné fan ou soufflante 16 est couplé au rotor 12, éventuellement via un réducteur épicycloïdal (non représenté), et génère un flux d'air qui se divise en un flux primaire 18 traversant les différents niveaux susmentionnés de la turbomachine, et en un flux secondaire 20 traversant un conduit annulaire (partiellement représenté) le long de la machine pour ensuite rejoindre le flux primaire en sortie de turbine.

Le flux secondaire peut être accéléré de sorte à générer une réaction de poussée nécessaire au vol d'un avion. Les flux primaire 18 et secondaire 20 sont des flux annulaires coaxiaux et emmanchés l'un dans l'autre. Ils sont canalisés par le carter de la turbomachine et/ou des viroles.

La figure 2 est une vue en coupe d'un compresseur d'une turbomachine axiale telle que celle de la figure 1. Le compresseur peut être un compresseur basse-pression 4. On peut y observer une partie de la soufflante 16 et le bec de séparation 22 du flux primaire 18 et du flux secondaire 20.

Le rotor 12 comprend plusieurs rangées d'aubes rotoriques 24, en l'occurrence trois. Il peut être un tambour monobloc aubagé, ou comprendre des aubes à fixation par queue d'aronde. Les aubes rotoriques 24 peuvent s'étendre radialement depuis une plateforme individuelle, ou depuis une couronne interne 25 du rotor 12.

Le compresseur basse-pression 4 comprend plusieurs redresseurs, en l'occurrence quatre, qui contiennent chacun une rangée d'aubes statoriques 26. Les redresseurs sont associés au fan 16 ou à une rangée d'aubes rotoriques pour redresser le flux d'air, de sorte à convertir la vitesse du flux en pression, notamment en pression statique.

Les aubes statoriques 26 s'étendent essentiellement radialement depuis un carter extérieur 28, et peuvent y être fixées et immobilisées à l'aide d'axes 30. Alternativement, les aubes peuvent être collées. Elles traversent radialement le flux primaire 18. Leurs pales peuvent traverser la paroi annulaire du carter extérieur 28. Au sein d'une même rangée, les aubes statoriques 26 sont régulièrement espacées les unes des autres, et présentent une même orientation angulaire dans le flux 18. Leurs cordes peuvent présenter une inclinaison fixe par rapport à l'axe de rotation 14. Avantageusement, les aubes d'une même rangée sont identiques et alignées. Chaque rangée d'aubes 26, 24 peut comprendre de cinquante à cent ou cent vingt unités.

Des viroles internes 32 peuvent être suspendues aux extrémités internes des aubes statoriques 26. Les viroles internes 32 peuvent coopérer de manière étanche avec le rotor 12 afin d'améliorer le taux de compression du compresseur 4.

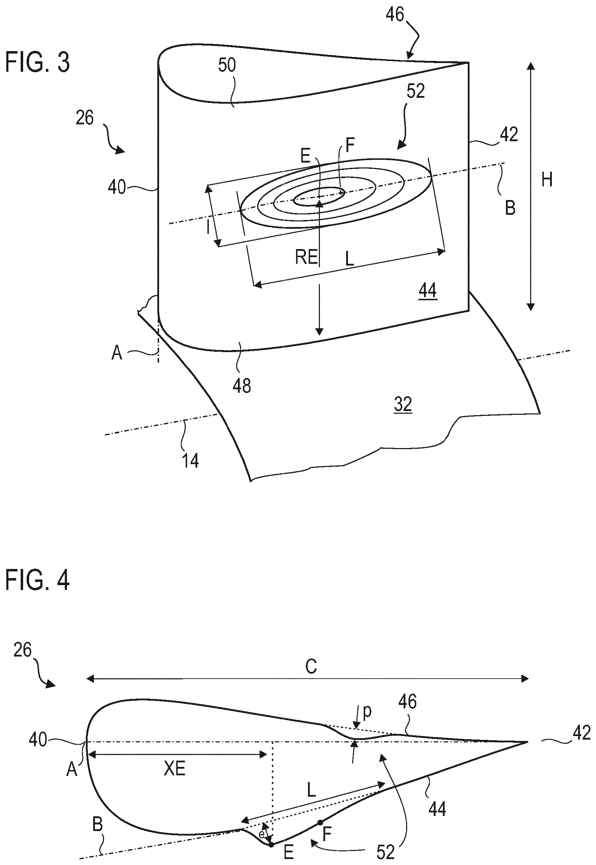

La figure 3 esquisse un premier exemple d'une aube 26 selon l'invention en vue isométrique. L'aube 26 comprend un bord d'attaque 40, un bord de fuite 42, une surface extrados 44 et une surface intrados 46 (invisible sur la figure 3). Ces surfaces 44, 46 sont bombées et s'étendent du bord d'attaque 40 au bord de fuite 42. La représentation de l'aube est schématique et la cambrure de l'extrados et de l'intrados ne sont pas nécessairement à l'échelle. L'invention est ici décrite en particulier pour une aube statorique 26 mais les mêmes types d'irrégularités peuvent être prévues sur une aube rotorique.

L'aube 26 peut être considérée comme un empilement de profils aérodynamiques cambrés, dont les côtés génèrent la surface intrados 46 et la surface extrados 44. A l'approche du bord de fuite 42, les contours des profils en intrados et/ou en extrados, peuvent être parallèles et/ou tangents à l'axe de rotation 14 du compresseur.

Le bord d'attaque 40 s'étend selon une direction moyenne notée A. Elle peut être sensiblement radiale.

L'aube 26 s'étend d'une extrémité radiale interne dite pied 48 à une extrémité radiale externe dite tête 50 sur une hauteur H.

Sur cet exemple, l'aube 26 comprend une irrégularité 52 sous la forme d'une protubérance sur l'extrados. Celle-ci s'étend d'une longueur L selon une direction de plus grande dimension B qui dans cet exemple est parallèle à l'axe 14. Transversalement, c'est-à-dire selon la hauteur de l'aube 26, la protubérance 52 s'étend selon une largeur l. Un point noté E est le point culminant de la protubérance.

La position radiale du point E peut être repérée radialement par rapport au pied de l'aube 48 par le paramètre RE. Selon diverses modes de réalisation de l'invention, RE peut être compris entre 25 et 75% de H ou entre 70 et 100% de H. D'autres positions non revendiquées sont possibles, par exemple de 0 à 30%.

Un point F est au centre de la protubérance 52, c'est-à-dire qu'il sépare la protubérance 52 en deux parts égales selon l'axe B de la longueur L.

La protubérance 52 est représentée à l'aide de lignes de niveau permettant de matérialiser les déclivités de celle-ci.

L'aube 26 est fixée au niveau de son pied 48 à une virole interne 32. La virole 32 est axisymétrique. En chaque point de la virole, celle-ci présente un rayon constant autour de l'axe 14. La virole 32 est dépourvue d'irrégularité. Alternativement, une irrégularité du type bosse ou creux peut être prévue sur la virole 32.

La figure 4 est une vue en coupe dans un plan perpendiculaire à la direction A de la figure 3 et passant par E. Pour l'aube 26 de la figure 3, ce plan comprend la droite indiquant la direction B.

La figure 4 montre deux exemples d'irrégularité 52 : une protubérance sur l'extrados 44 et un renfoncement sur l'intrados 46. Il est entendu que l'invention ne se limite pas à ce type de configuration et qu'extrados 44 comme intrados 46 peuvent indifféremment être pourvus d'aucun(e), d'un(e) ou de plusieurs renfoncement/protubérance. Aussi, les irrégularités de l'extrados et de l'intrados ne sont pas limitées à être positionnées dans un même plan et c'est dans un but de simplification que les deux sont représentées ici dans la même section de l'aube 26.

Le point E représente le sommet de l'irrégularité 52. Celui-ci est à une distance e, mesurée normalement à l'extrados, e définissant l'épaisseur ou amplitude de l'irrégularité par rapport à l'extrados.

L'irrégularité s'étend sur une longueur L. La longueur L peut être mesurée curvilignement selon la ligne nominale (en pointillés) de l'extrados 44 en absence d'irrégularité.

Le point F est le centre de l'irrégularité, à mi-chemin longitudinalement. Pour certaines formes d'irrégularités, les points E et F peuvent être confondus.

L'irrégularité 52 du côté intrados 46 illustre la profondeur p d'un renfoncement. Les mêmes paramètres E, F, L peuvent être utilisés (non représentés).

La corde est le segment qui relie le bord d'attaque 40 au bord de fuite 42. La longueur de la corde est ici notée C. La position du point E peut être repérée sur la corde par le paramètre noté ici XE.

Selon diverses modes de réalisation de l'invention, XE peut être compris entre 0 et 30% de C ou entre 0 et 50% de C. D'autres positions non revendiquées sont possibles, par exemple de 50 à 70%.

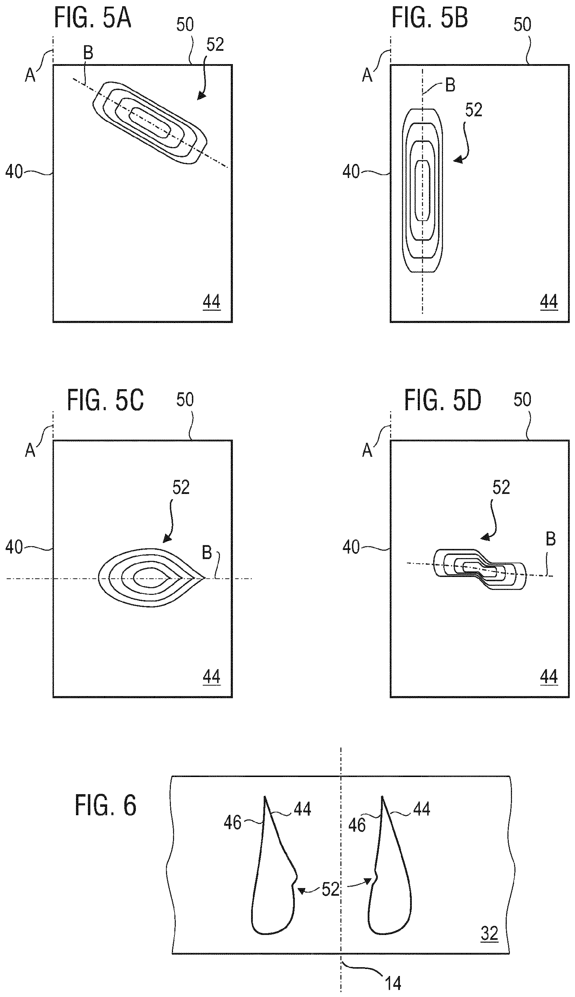

Les figures 5A à 5D montrent, selon une vue normale à l'extrados 44, d'autres exemples d'irrégularités 52 que peut recevoir l'extrados 44 ou l'intrados 46 de l'aube 26. Chacun des exemples peut être adapté sur l'intrados ou l'extrados, seul ou en combinaison d'autres irrégularités. Les formes représentées peuvent être indifféremment appliquées à une protubérance ou à un renfoncement. Lorsque l'aube comprend plusieurs irrégularités, celles-ci peuvent être discontinues ou dans le prolongement de l'écoulement l'une de l'autre. Par exemple, un renfoncement peut suivre une protubérance ou inversement.

La figure 5A décrit un exemple d'irrégularité 52 au voisinage de la tête 50 de l'aube 26. L'irrégularité 52 forme un angle d'environ 30° avec le bord d'attaque 40 et le point E est au milieu de l'aube axialement et est situé à environ 75% de la hauteur de l'aube.

La figure 5B décrit une irrégularité 52 qui est sensiblement parallèle au bord d'attaque 40. Dans cet exemple, l'irrégularité 52 s'étend en hauteur d'une longueur d'environ la moitié de la hauteur de l'aube.

La figure 5C représente une autre configuration d'irrégularité 52 qui illustre le fait que la largeur de l'irrégularité peut ne pas être constante sur toute l'étendue de l'irrégularité 52. Dans cet exemple, l'irrégularité 52 a une forme de goutte d'eau. Des formes triangulaires ou trapézoïdales sont également possibles. La plus grande largeur peut se trouver en amont ou en aval.

La figure 5D illustre une variante dans laquelle l'irrégularité 52 a une direction principale qui n'est pas linéaire. Dans ce cas précis, l'irrégularité décrit une courbe en S. Une telle irrégularité permet de faire converger radialement un flux, par exemple dans la partie aval d'un compresseur, avant la veine en forme de col de cygne.

La figure 6 illustre dans une vue en projection radiale, deux aubes adjacentes d'un compresseur. Les aubes présentent une protubérance et un renfoncement 52, respectivement, qui sont en regard l'une de l'autre. Les surfaces géométriques que définissent ces irrégularités en regard sont identiques au moins en partie, l'une étant l'image de l'autre par rotation autour de l'axe 14, ou par translation selon un axe perpendiculaire au rayon. Ainsi, les deux aubes peuvent guider au moins partiellement le flux de manière identique.

## Revendications

1. Aube (26) pour compresseur (4, 6) de turbomachine axiale (2), l'aube (26) comprenant un bord d'attaque (40), un bord de fuite (42), une surface extrados (44) et une surface intrados (46), l'aube comprenant une unique irrégularité (52) sous la forme d'une protubérance en saillie de l'extrados (44) ou de l'intrados (46) ou sous la forme d'un renfoncement niché dans l'extrados (44) ou l'intrados (46), **caractérisée en ce que** l'irrégularité (52) présente une direction (B) de plus grande dimension sensiblement parallèle au bord d'attaque (40), l'irrégularité (52) présentant des variations d'épaisseur ou de profondeur selon sa direction (B) de plus grande dimension et le point (E) de l'irrégularité (52) présentant l'épaisseur ou la profondeur maximale a une position radiale (RE) qui est comprise entre 25 et 75% de la hauteur (H) de l'aube (26).

2. Aube (26) selon la revendication 1, **caractérisée en ce que** le point (E) de l'irrégularité (52) présentant l'épaisseur ou la profondeur maximale a une position (XE) le long de la corde, mesurée depuis le bord d'attaque (40), comprise entre 0 et 30% de la corde (C).

3. Aube (26) selon l'une des revendications 1 ou 2, **caractérisée en ce que** l'irrégularité (52) présente une direction (B) de plus grande dimension qui forme un angle compris entre 0 et 20° par rapport à la direction (A) moyenne du bord d'attaque (40).

4. Aube (26) selon l'une des revendications 1 à 3, **caractérisée en ce que** l'épaisseur (e) ou la profondeur (p) maximale de l'irrégularité (52), mesurée selon la normale à l'extrados (44) ou l'intrados (46) est comprise entre 1 et 15% de l'épaisseur de l'aube (26) au droit du point (E) de l'irrégularité (52) présentant l'épaisseur ou la profondeur maximale.

5. Aube (26) selon l'une des revendications 1 à 4, **caractérisée en ce que** l'aube (26) comprend un pied (48) et une tête (50) définissant les extrémités radiales de l'aube (26), l'irrégularité (52) étant à une distance du pied (48) et de la tête (50) de l'aube (26) d'au moins 5% de la hauteur (H) radiale de l'aube (26).

6. Aube (26) pour compresseur (4, 6) de turbomachine axiale (2), l'aube (26) comprenant un bord d'attaque (40), un bord de fuite (42), une surface extrados (44) et une surface intrados (46), l'aube comprenant une unique irrégularité (52) sous la forme d'une protubérance en saillie de l'extrados (44) ou de l'intrados (46) ou sous la forme d'un renfoncement niché dans l'extrados (44) ou l'intrados (46), l'irrégularité (52) étant circonscrite à la moitié radiale externe de l'aube (26) et présentant une direction (B) de plus grande dimension qui est sensiblement axiale, l'irrégularité (52) étant venue de matière avec l'aube (26) et étant apte à former une surface de guidage de l'air, **caractérise en ce que** l'irrégularité (52) présente une continuité de matière progressive par rapport à l'extrados (44) ou l'intrados (46), l'irrégularité étant continue et progressive dans les trois directions de l'espace, l'épaisseur (e) ou la profondeur (p) maximale de l'irrégularité (52), mesurée selon la normale à l'extrados (44) ou l'intrados (46) étant comprise entre 1 et 15% de l'épaisseur de l'aube (26) au droit du point (E) de l'irrégularité (52) présentant l'épaisseur ou la profondeur maximale.

7. Aube (26) selon la revendication 6, **caractérisée en ce que** le point (E) de l'irrégularité (52) présentant l'épaisseur ou la profondeur maximale a une position radiale (RE) qui est comprise entre 70 et 100% de la hauteur (H) de l'aube (26).

8. Aube (26) selon la revendication 6 ou 7, **caractérisée en ce que** le point (E) de l'irrégularité (52) présentant l'épaisseur ou la profondeur maximale a une position (XE) le long de la corde, mesurée depuis le bord d'attaque (40), comprise entre 0 et 50% de la corde (C).

9. Aube (26) selon l'une des revendications 6 à 8, **caractérisée en ce que** l'irrégularité (52) présente une direction (B) de plus grande dimension qui forme un angle compris entre 45 et 90° avec la direction (A) moyenne du bord d'attaque (40).

10. Aube (26) pour compresseur (4, 6) de turbomachine axiale (2), l'aube (26) comprenant un bord d'attaque (40), un bord de fuite (42), une surface extrados (44) et une surface intrados (46), l'aube comprenant une unique irrégularité (52) sous la forme d'une protubérance en saillie de l'extrados (44) ou de l'intrados (46) ou sous la forme d'un renfoncement niché dans l'extrados (44) ou l'intrados (46), l'irrégularité (52) étant circonscrite à la moitié radiale externe de l'aube (26) et présentant une direction (B) de plus grande dimension qui est sensiblement axiale, l'irrégularité (52) étant venue de matière avec l'aube (26) et étant apte à former une surface de guidage de l'air, **caractérise en ce que** l'irrégularité (52) présente une direction (B) de plus grande dimension qui forme un angle compris entre 45 et 90° avec la direction (A) moyenne du bord d'attaque (40), l'angle étant tel que l'irrégularité (52) s'éloigne de la tête de l'aube en aval.

11. Aube (26) selon la revendication 10, **caractérisée en ce que** l'épaisseur (e) ou la profondeur (p) maximale de l'irrégularité (52), mesurée selon la normale à l'extrados (44) ou l'intrados (46) est comprise entre 1 et 15% de l'épaisseur de l'aube (26) au droit du point (E) de l'irrégularité (52) présentant l'épaisseur ou la profondeur maximale.

12. Aube (26) selon l'une des revendications 1 à 11, **caractérisée en ce que** l'irrégularité (52) est asymétrique, le point (F) milieu de l'irrégularité (52) dans la direction (B) de plus grande dimension étant préférentiellement en aval du point (E) présentant l'épaisseur ou la profondeur maximale et/ou l'irrégularité (52) comprend une pluralité de points (E) pour lesquels l'épaisseur ou la profondeur de l'irrégularité (52) est maximale .

13. Aube (26) selon l'une des revendications 1 à 12, **caractérisée en ce que** l'irrégularité (52) s'étend principalement selon une direction (B) non-linéaire, éventuellement en forme de S et/ou l'irrégularité (52) présente une variation de largeur et/ou l'irrégularité (52) forme avec l'extrados (44) ou l'intrados (46) une surface continue et dérivable.

14. Compresseur (4 ; 6) de turbomachine (2), comprenant au moins une rangée d'aubes (24) rotoriques et au moins une rangée d'aubes (26) statoriques, le compresseur étant **caractérisé en ce qu'**au moins une des aubes (26) rotoriques ou statoriques est selon l'une des revendications 1 à 13.

15. Compresseur (2, 4) selon la revendication 14, **caractérisé en ce qu'**il comprend deux aubes selon l'une des revendications 1 à 13, circonférentiellement adjacentes, et présentant chacune une irrégularité (52) sur la face extrados (44) et intrados (46) en regard de l'autre aube, l'irrégularité (52) sur l'extrados (44) d'une des aubes formant une première surface et l'irrégularité (52) sur l'intrados (46) de l'autre aube formant une seconde surface, les première et seconde surfaces étant parallèles ou étant l'une l'image de l'autre par rotation autour de l'axe (14) du compresseur (2, 4), au moins en partie.

## Patentansprüche

1. Eine Schaufel (26) für einen Verdichter (4, 6) einer axialen Turbomaschine (2), wobei die Schaufel (26) eine Vorderkante (40), eine Hinterkante (42), eine obere Oberfläche (44) und eine untere Oberfläche (46) umfasst, wobei die Schaufel (26) eine einzige Unregelmäßigkeit (52) in Form eines Vorsprungs umfasst,
der aus der oberen Oberfläche (44) oder der unteren Oberfläche (46) herausragt oder in Form einer Vertiefung, die in die obere Oberfläche (44) oder die untere Oberfläche (46) eingelassen ist, **dadurch gekennzeichnet, dass** die Unregelmäßigkeit (52)
eine Richtung (B) von größter Dimension aufweist, die im Wesentlichen parallel zur Vorderkante (40) ist, wobei die Unregelmäßigkeit (52) Dicken-
oder Tiefenvariationen entlang ihrer Richtung (B) von größter Dimension aufweist und der Punkt (E) der Unregelmäßigkeit (52), der die maximale Dicke oder Tiefe aufweist, eine radiale Position (RE) aufweist, die zwischen 25 und 75% der Höhe (H) der Schaufel (26) liegt.

2. Schaufel (26) nach Anspruch 1, **dadurch gekennzeichnet, dass** der Punkt (E) der Unregelmäßigkeit (52), der die maximale Dicke oder Tiefe aufweist, eine Position (XE) entlang der Schaufelsehne aufweist, gemessen von der Vorderkante (40), die zwischen 0 und 30% der Schaufelsehne (C) liegt.

3. Schaufel (26) nach einem der Ansprüche 1 oder 2, **dadurch gekennzeichnet, dass** die Unregelmäßigkeit (52) eine Richtung (B) von größter Dimension aufweist, die einen Winkel von zwischen 0 und 20° im Verhältnis zur mittleren Richtung (A) der Vorderkante (40) bildet.

4. Schaufel (26) nach einem der Ansprüche 1 bis 3, **dadurch gekennzeichnet, dass** die maximale Dicke (e) oder Tiefe (p) der Unregelmäßigkeit (52), gemessen senkrecht zur oberen Oberfläche (44) oder der unteren Oberfläche (46), zwischen 1 und 15% der Dicke der Schaufel (26) an dem Punkt (E) beträgt, der die maximale Dicke oder Tiefe der Unregelmäßigkeit (52) aufweist.

5. Schaufel (26) nach einem der Ansprüche 1 bis 4, **dadurch gekennzeichnet, dass** die Schaufel (26) einen Fuß (48) und einen Kopf (50) umfasst, die die radialen Enden der Schaufel (26) definieren, wobei die Unregelmäßigkeit (52) in einem Abstand vom Fuß (48) und vom Kopf (50) der Schaufel (26) von mindestens 5% der radialen Höhe (H) der Schaufel (26) liegt.

6. Eine Schaufel (26) für einen Verdichter (4, 6) einer axialen Turbomaschine (2), wobei die Schaufel (26) eine Vorderkante (40), eine Hinterkante (42), eine obere Oberfläche (44) und eine untere Oberfläche (46) umfasst, wobei die Schaufel (26) eine einzige Unregelmäßigkeit (52) in Form eines Vorsprungs umfasst, der aus der oberen Oberfläche (44) oder der unteren Oberfläche (46) herausragt oder in Form einer Vertiefung, die in die obere Oberfläche (44) oder die untere Oberfläche (46) eingelassen ist, wobei die Unregelmäßigkeit (52) auf die äußere radiale Hälfte der Schaufel (26) begrenzt ist und eine Richtung (B) von größter Dimension aufweist, die im Wesentlichen axial ist, wobei die Unregelmäßigkeit (52) mit der Schaufel (26) hergestellt ist und geeignet ist, eine Luftführung zu bilden, **dadurch gekennzeichnet, dass** die Unregelmäßigkeit (52) eine...
kontinuierlichen und allmählichen Übergang bezüglich der oberen Oberfläche (44) oder der unteren Oberfläche (46), wobei die Unregelmäßigkeit kontinuierlich und allmählich in den drei Raumrichtungen ist,
die maximale Dicke (e) oder Tiefe (p) der Unregelmäßigkeit (52), gemessen senkrecht zur oberen Oberfläche (44) oder unteren Oberfläche (46), zwischen 1 und 15% der Dicke der Schaufel (26) an dem Punkt (E) beträgt, der die maximale Dicke oder Tiefe der Unregelmäßigkeit (52) aufweist.

7. Schaufel (26) nach Anspruch 6, **dadurch gekennzeichnet, dass** der Punkt (E) der Unregelmäßigkeit (52), der die maximale Dicke oder Tiefe aufweist, eine radiale Position (RE) aufweist, die zwischen 70 und 100% der Höhe (H) der Schaufel (26) liegt.

8. Schaufel (26) nach einem der Ansprüche 6 oder 7, **dadurch gekennzeichnet, dass** der Punkt (E) der Unregelmäßigkeit (52), der die maximale Dicke oder Tiefe aufweist, eine Position (XE) entlang der Schaufelsehne aufweist, gemessen von der Vorderkante (40), die zwischen 0 und 50% der Schaufelsehne (C) liegt.

9. Schaufel (26) nach einem der Ansprüche 6 bis 8, **dadurch gekennzeichnet, dass** die Unregelmäßigkeit (52) eine Richtung (B) von größter Dimension aufweist, die einen Winkel von zwischen 45 und 90° im Verhältnis zur mittleren Richtung (A) der Vorderkante (40) bildet.

10. Schaufel (26) für Verdichter (4, 6) einer axialen Turbomaschine (2), wobei die Schaufel (26) eine Vorderkante (40), eine Hinterkante (42), eine obere Oberfläche (44) und eine untere Oberfläche (46) umfasst, wobei die Schaufel (26) eine einzige Unregelmäßigkeit (52) in Form eines Vorsprungs umfasst, der aus der oberen Oberfläche (44) oder der unteren Oberfläche (46) herausragt oder in Form einer Vertiefung, die in die obere Oberfläche (44) oder die untere Oberfläche (46) eingelassen ist, wobei die Unregelmäßigkeit (52)
auf die äußere radiale Hälfte der Schaufel (26) begrenzt ist und eine Richtung (B) von größter Dimension aufweist, die im Wesentlichen axial ist, wobei die Unregelmäßigkeit (52) mit der Schaufel (26) hergestellt ist und geeignet ist, eine Luftführung zu bilden, **dadurch gekennzeichnet, dass** die Unregelmäßigkeit (52) eine Richtung (B) von größter Dimension aufweist, die einen Winkel von zwischen 45 und 90° im Verhältnis zur mittleren Richtung (A) der Vorderkante (40) bildet, wobei der Winkel so ist, dass sich die Unregelmäßigkeit (52) vom Kopf der Schaufel (26) stromabwärts entfernt.

11. Schaufel (26) nach Anspruch 10, **dadurch gekennzeichnet, dass** die maximale Dicke (e) oder Tiefe (p) der Unregelmäßigkeit (52), gemessen senkrecht zur oberen Oberfläche (44) oder unteren Oberfläche (46), zwischen 1 und 15% der Dicke der Schaufel (26) an dem Punkt (E) beträgt, der die maximale Dicke oder Tiefe der Unregelmäßigkeit (52) aufweist.

12. Schaufel (26) nach einem der Ansprüche 1 bis 11, **dadurch gekennzeichnet, dass** die Unregelmäßigkeit (52) asymmetrisch ist, wobei der Punkt (F) in der Mitte der Unregelmäßigkeit (52) in der Richtung (B) von größter Dimension vorzugsweise stromabwärts des Punktes (E) liegt, der die maximale Dicke oder Tiefe aufweist und/oder die Unregelmäßigkeit (52) eine Vielzahl von Punkten (E) umfasst, für die die Dicke oder Tiefe der Unregelmäßigkeit (52) maximal ist.

13. Schaufel (26) nach einem der Ansprüche 1 bis 12, **dadurch gekennzeichnet, dass** die Unregelmäßigkeit (52) sich hauptsächlich in einer nicht-linearen Richtung (B), möglicherweise in S-Form, erstreckt und/oder die Unregelmäßigkeit (52) eine Variation der Breite aufweist und/oder die Unregelmäßigkeit (52) eine kontinuierliche und differenzierbare Oberfläche mit der oberen Oberfläche (44) oder der unteren Oberfläche (46) bildet.

14. Verdichter (4; 6) einer Turbomaschine (2), umfassend mindestens eine Reihe von rotorischen Schaufeln (24) und mindestens eine Reihe von statorischen Schaufeln (26), **dadurch gekennzeichnet, dass** mindestens eine der rotorischen oder statorischen Schaufeln (26) nach einem der Ansprüche 1 bis 13 ist.

15. Verdichter (2, 4) nach Anspruch 14, **dadurch gekennzeichnet, dass** er zwei Schaufeln nach einem der Ansprüche 1 bis 13 umfasst, die sich in Umfangsrichtung benachbart sind, wobei jede eine Unregelmäßigkeit (52) auf der oberen Oberfläche (44) und der unteren Oberfläche (46) aufweist, die der anderen Schaufel zugewandt ist,
die Unregelmäßigkeit (52) auf der oberen Oberfläche (44) einer der Schaufeln eine erste Oberfläche bildet, und die Unregelmäßigkeit (52) auf der unteren Oberfläche (46) der anderen Schaufel eine zweite Oberfläche bildet, wobei die erste und zweite Oberfläche parallel sind oder eine das Spiegelbild der anderen durch Rotation um die Achse (14) des Verdichters (2, 4) darstellen, zumindest teilweise.

## Claims

1. A blade (26) for a compressor (4, 6) of an axial turbomachine (2), the blade (26) comprising a leading edge (40), a trailing edge (42), an outer surface (44), and an inner surface (46), the blade comprising a single irregularity (52) in the form of a protrusion extending from the outer surface (44) or the inner surface (46) or in the form of a recess nestled in the outer surface (44) or the inner surface (46), **characterized in that** the irregularity (52) has a direction (B) of greatest dimension substantially parallel to the leading edge (40), the irregularity (52) showing variations in thickness or depth according to its direction (B) of greatest dimension, and the point (E) of the irregularity (52) with the maximum thickness or depth has a radial position (RE) that is between 25 and 75% of the height (H) of the blade (26).

2. The blade (26) according to claim 1, **characterized in that** the point (E) of the irregularity (52) with the maximum thickness or depth has a position (XE) along the chord, measured from the leading edge (40), between 0 and 30% of the chord (C).

3. The blade (26) according to one of claims 1 or 2, **characterized in that** the irregularity (52) has a direction (B) of greatest dimension forming an angle between 0 and 20° relative to the average direction (A) of the leading edge (40).

4. The blade (26) according to one of claims 1 to 3, **characterized in that** the maximum thickness (e) or depth (p) of the irregularity (52), measured in the normal direction to the outer surface (44) or the inner surface (46), is between 1 and 15% of the thickness of the blade (26) at the point (E) of the irregularity (52) with the maximum thickness or depth.

5. The blade (26) according to one of claims 1 to 4, **characterized in that** the blade (26) includes a root (48) and a tip (50) defining the radial ends of the blade (26), the irregularity (52) being located at a distance from the root (48) and the tip (50) of the blade (26) of at least 5% of the radial height (H) of the blade (26).

6. A blade (26) for a compressor (4, 6) of an axial turbomachine (2), the blade (26) comprising a leading edge (40), a trailing edge (42), an outer surface (44), and an inner surface (46), the blade comprising a single irregularity (52) in the form of a protrusion extending from the outer surface (44) or the inner surface (46) or in the form of a recess nestled in the outer surface (44) or inner surface (46), the irregularity (52) being confined to the outer radial half of the blade (26) and having a direction (B) of greatest dimension that is substantially axial, the irregularity (52) being integrally formed with the blade (26) and capable of forming an air guiding surface, **characterized in that** the irregularity (52) has a continuity of progressive material with respect to the outer surface (44) or the inner surface (46), the irregularity being continuous and progressive in all three directions in space, the maximum thickness (e) or depth (p) of the irregularity (52), measured according to the normal to the outer surface (44) or the inner surface (46) being between 1 and 15% of the thickness of the blade (26) at the point (E) of the irregularity (52) having the maximum thickness or depth.

7. The blade (26) according to claim 6, **characterized in that** the point (E) of the irregularity (52) having the maximum thickness or depth has a radial position (RE) which is between 70 and 100% of the height (H) of the blade (26).

8. The blade (26) according to claim 6 or 7, **characterized in that** the point (E) of the irregularity (52) having the maximum thickness or depth has a position (XE) along the chord, measured from the leading edge (40), between 0 and 50% of the chord (C).

9. The blade (26) according to one of the claims 6 to 8, **characterized in that** the irregularity (52) has a direction (B) of greatest dimension forming an angle between 45 and 90° with the average direction (A) of the leading edge (40).

10. A blade (26) for a compressor (4, 6) of an axial turbomachine (2), the blade (26) comprising a leading edge (40), a trailing edge (42), an outer surface (44), and an inner surface (46), the blade comprising a single irregularity (52) in the form of a protrusion extending from the outer surface (44) or the inner surface (46) or in the form of a recess nestled in the outer surface (44) or the inner surface (46), the irregularity (52) being confined to the outer radial half of the blade (26) and has a direction (B) of greatest dimension that is substantially axial, the irregularity (52) being integrally formed with the blade (26) and capable of forming an air guiding surface, **characterized in that** the irregularity (52) has a direction (B) of greatest dimension forming an angle between 45 and 90° with the average direction (A) of the leading edge (40), the angle being such that the irregularity (52) moves away from the blade tip downstream.

11. The blade (26) according to claim 10, **characterized in that** the maximum thickness (e) or depth (p) of the irregularity (52), measured according to the normal to the outer surface (44) or the inner surface (46) is between 1 and 15% of the thickness of the blade (26) at the point (E) of the irregularity (52) having the maximum thickness or depth.

12. The blade (26) according to one of claims 1 to 11, **characterized in that** the irregularity (52) is asymmetrical, the midpoint (F) of the irregularity (52) in the direction (B) of greatest dimension being preferably downstream of the point (E) showing the maximum thickness or depth and/or the irregularity (52) comprises a plurality of points (E) at which the thickness or depth of the irregularity (52) is maximal.

13. The blade (26) according to one of claims 1 to 12, **characterized in that** the irregularity (52) extends mainly in a non-linear direction (B), optionally in an S-shape and/or the irregularity (52) shows a variation in width and/or the irregularity (52) forms a continuous and derivable surface with the outer surface (44) or the inner surface (46).

14. A compressor (4, 6) for a turbomachine (2), comprising at least one row of rotor blades (24) and at least one row of stator blades (26), the compressor being **characterized in that** at least one of the rotor blades (24) or stator blades is according to one of claims 1 to 13.

15. The compressor (2, 4) according to claim 14, **characterized in that** it comprises two blades according to one of claims 1 to 13, circumferentially adjacent, and each having an irregularity (52) on the outer surface (44) and inner surface (46) facing the other blade, the irregularity (52) on the outer surface (44) of one blade forming a first surface and the irregularity (52) on the inner surface (46) of the other blade forming a second surface, the first and second surfaces being parallel or one being an image of the other by rotation about the axis (14) of the compressor (2, 4), at least in part.
